# FASCICULE DE BREVET EUROPEEN

(11) **EP 3 999 729 B1**
(45) Date de publication et mention de la délivrance du brevet: **10.05.2023**
(21) Numéro de dépôt: 20750322.8
(22) Date de dépôt: 07.07.2020
(51) Int. Cl.: F02C 7/32, F02C 7/36, F16H 57/08

(54) **RÉDUCTEUR À TRAIN ÉPICYCLOÏDAL POUR UNE TURBOMACHINE**
PLANETENUNTERSETZUNGSGETRIEBE FÜR EINE TURBOMASCHINE
EPICYCLIC REDUCTION GEAR FOR A TURBOMACHINE

(30) Priorité: 16.07.2019 FR 1908012
(43) Date de publication de la demande: 25.05.2022
(73) Titulaire: Safran Transmission Systems, 92700 Colombes (FR)
(72) Inventeur: NIEPCERON, Clément, Paul, René, 77550 MOISSY-CRAMAYEL (FR); MORELLI, Boris, Pierre, Marcel, 77550 MOISSY-CRAMAYEL (FR)
(74) Mandataire: Gevers & Orès
(86) Numéro de dépôt international: PCT/FR2020/051203
(87) Numéro de publication internationale: WO 2021/009435

(56) Documents cités:
- EP-A1- 3 246 546
- EP-A2- 2 728 140
- US-A1- 2018 023 483

## Description

### Domaine technique de l'invention

La présente invention se rapporte notamment à un réducteur à train épicycloïdal pour une turbomachine et à une turbomachine comprenant un tel réducteur.

### Arrière-plan technique

Une turbomachine, telle qu'un turboréacteur à double flux, comprend classiquement une entrée d'air comportant une soufflante carénée dont le flux d'air en sortie se divise en un flux d'air qui pénètre dans une veine primaire et forme un flux chaud (ou flux primaire), et en un flux d'air qui s'écoule dans une veine secondaire qui s'étend autour de la veine primaire et qui forme un flux froid (ou flux secondaire).

La turbomachine comprend typiquement d'amont en aval, dans le sens d'écoulement des gaz, au moins un compresseur, une chambre de combustion, au moins une turbine, et une tuyère d'éjection dans laquelle les gaz de combustion sortant de la turbine (flux primaire) sont mélangés au flux secondaire.

Dans le cas d'une turbomachine à réducteur, un arbre d'une turbine (ci-après dénommé arbre de turbine) entraîne l'arbre de la soufflante (ci-après dénommé arbre de soufflante) par l'intermédiaire d'un réducteur à train épicycloïdal. Le réducteur est généralement placé dans une enceinte annulaire disposée entre la soufflante et le compresseur, et permet de réduire la vitesse de rotation de l'arbre de soufflante par rapport à celle de l'arbre de turbine.

Comme son nom l'indique, un réducteur à train épicycloïdal comprend un train épicycloïdal comportant au moins un solaire, une couronne, un satellite et un porte-satellite. En fonction des besoins, un tel réducteur à train épicycloïdal peut être configuré de différentes manières.

On s'intéressera plus particulièrement dans la suite de la description à la configuration communément appelée « planétaire ». Plus précisément, dans une telle configuration, le réducteur présente un solaire solidaire de l'arbre de turbine, une couronne solidaire de l'arbre de soufflante et un porte-satellite immobile (ou fixe).

Une turbomachine comprend en outre classiquement un boîtier d'accessoires plus connu sous l'acronyme anglais AGB pour « Accessory GearBox », ce boîtier AGB étant généralement disposé sur un carter de la soufflante à l'intérieur de la nacelle. Un boîtier AGB est destiné à transmettre une puissance mécanique prélevée sur le moteur de la turbomachine à des équipements tels qu'une pompe, un alterno-démarreur, un séparateur air/huile, etc. Chaque équipement est rapporté directement sur le boîtier AGB.

Il est connu du document FR-A1-3054264 au nom de la demanderesse d'entraîner en rotation le rotor d'un équipement via le solaire du réducteur. Un tel agencement permet de déplacer un équipement du boîtier AGB dans l'enceinte dans laquelle se trouve le réducteur, et ainsi de limiter l'encombrement du boîtier AGB et par conséquent de réduire les dimensions de la nacelle. Un tel agencement peut également permettre d'ajouter un équipement électrique ou hydraulique, de façon à augmenter la puissance électrique ou hydraulique disponible, sans toutefois accroître l'encombrement du boîtier AGB.

Toutefois, un tel agencement n'est pas compatible avec toutes les architectures de turbomachine puisqu'il exige un emplacement libre en amont du solaire (et de manière plus générale en amont du réducteur). Un tel emplacement n'est par exemple pas disponible lorsque l'architecture de la turbomachine comprend un guidage de l'arbre de turbine par rapport à l'arbre de soufflante en amont du réducteur.

L'objectif de la présente invention est ainsi de proposer un réducteur à train épicycloïdal muni d'un équipement permettant de remédier aux inconvénients précités.

### Résumé de l'invention

L'invention propose ainsi un réducteur à train épicycloïdal pour une turbomachine comprenant :
- un solaire mobile en rotation autour d'un premier axe A et apte à être entraîné en rotation par une turbine de la turbomachine ;
- une couronne entourant le solaire et mobile en rotation autour du premier axe A, la couronne étant apte à entraîner en rotation un arbre de soufflante ;
- au moins un satellite mobile en rotation autour d'un second axe B, le satellite étant engrené avec le solaire et la couronne ;
- un porte-satellite immobile, le satellite étant guidé en rotation autour du second axe B par rapport à un palier du porte-satellite ;
- un équipement comprenant un rotor ;
caractérisé en ce que l'équipement est rapporté sur le palier du porte-satellite et le rotor de l'équipement est entraîné en rotation par le satellite. Un tel agencement de l'équipement est compatible avec davantage d'architectures de turbomachine.

Lorsque le réducteur comprend plusieurs satellites, chaque satellite du réducteur peut entraîner en rotation un ou plusieurs équipements, de manière à limiter l'encombrement du boîtier AGB (et par conséquent réduire les dimensions de la nacelle) et/ou à augmenter la puissance électrique et/ou hydraulique disponible.

Le réducteur selon l'invention peut comprendre une ou plusieurs des caractéristiques et/ou étapes suivantes, prises isolément les unes des autres ou en combinaison les unes avec les autres :
- le rotor de l'équipement est entraîné en rotation par le satellite via un train d'engrenages ;
- le train d'engrenages est disposé entièrement à l'intérieur du satellite ;
- le train d'engrenages comprend un engrenage droit entre une denture intérieure du satellite et une roue dentée à denture extérieure, la roue dentée étant mobile en rotation autour d'un troisième axe C décalé par rapport au second axe B et parallèle aux premier et second axes A, B, la roue dentée étant solidaire d'un arbre d'entrainement mobile en rotation autour du troisième axe C, le rotor de l'équipement étant couplé en rotation avec l'arbre d'entrainement via des moyens d'accouplement ;
- un stator de l'équipement est fixé au palier du porte-satellite via un support, l'arbre d'entrainement étant guidé en rotation par rapport au support via deux paliers du support distants l'un de l'autre ;
- le train d'engrenages comprend un premier engrenage conique entre une denture extérieure du satellite et une première roue dentée mobile en rotation autour d'un quatrième axe D perpendiculaire aux premier et second axes A, B, et un second engrenage conique entre une seconde roue dentée mobile en rotation autour du quatrième axe D et une troisième roue dentée mobile en rotation autour d'un cinquième axe F parallèle aux premier et second axes A, B, la troisième roue dentée étant solidaire d'un arbre d'entrainement, le rotor de l'équipement étant couplé en rotation avec l'arbre d'entrainement via des moyens d'accouplement ;
- un stator de l'équipement est rapporté sur le palier du porte-satellite via un support, les première et seconde roues dentées étant solidaires d'un arbre de transmission mobile en rotation autour du quatrième axe D, l'arbre de transmission étant guidé en rotation par rapport au support via deux paliers du support distants l'un de l'autre ;
- les moyens d'accouplement comportent des dents bombées engagées dans des cannelures axiales ;
- le palier du porte-satellite comprend des roulements reliés d'une part à une bague du palier du porte-satellite et d'autre part au satellite, le réducteur comprenant des moyens d'acheminement d'huile jusqu'aux roulements, les moyens d'acheminement d'huile étant configurés pour acheminer de l'huile jusqu'à l'équipement.

La présente invention concerne encore une turbomachine comprenant un réducteur tel que décrit précédemment.

### Brève description des figures

L'invention sera mieux comprise et d'autres détails, caractéristiques et avantages de l'invention apparaîtront plus clairement à la lecture de la description suivante faite à titre d'exemple non limitatif et en référence aux dessins annexés dans lesquels :
[Fig.1] la figure 1 est une vue schématique en coupe axiale d'une turbomachine comprenant un réducteur selon l'invention ;
[Fig.2] la figure 2 est une vue en perspective en demi-coupe axiale d'un réducteur selon un premier mode de réalisation ;
[Fig.3] la figure 3 est une vue en demi-coupe axiale du réducteur selon le premier mode de réalisation ;
[Fig.4] la figure 4 est une vue en perspective en demi-coupe axiale d'un réducteur selon un second mode de réalisation ;
[Fig.5] la figure 5 est une vue en demi-coupe axiale du réducteur selon le second mode de réalisation.

### Description détaillée de l'invention

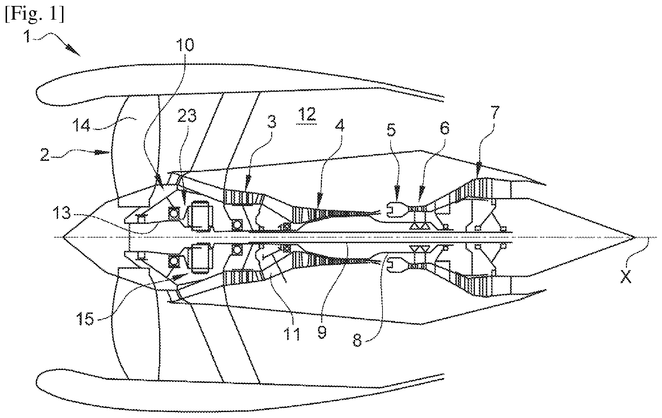

Sur la figure 1 est représentée une turbomachine 1 à réducteur, qui comprend classiquement d'amont en aval, dans le sens d'écoulement des gaz, une soufflante carénée 2 et un moteur comportant un compresseur basse pression 3, un compresseur haute pression 4, une chambre de combustion 5, une turbine haute pression 6 et une turbine basse pression 7. Les rotors du compresseur haute pression 4 et de la turbine haute pression 6 sont reliés par un arbre haute pression 8 et forment avec lui un corps haute pression (HP). Les rotors du compresseur basse pression 3 et de la turbine basse pression 7 sont reliés par un arbre basse pression 9 et forment avec lui un corps basse pression (BP).

Par convention, dans la présente demande, les termes « amont » et « aval » sont définis par rapport au sens de circulation des gaz dans la turbomachine. On entend par « axial » ou « axialement » toute direction parallèle à l'axe X de la turbomachine (axe de rotation des arbres haute pression et basse pression), et par « radial » ou « radialement » toute direction perpendiculaire à l'axe X de la turbomachine. De même, par convention dans la présente demande, les termes « interne », « externe », « intérieur » et « extérieur » sont définis radialement par rapport à l'axe X de la turbomachine.

Le flux d'air généré par la soufflante 2 est divisé, par un bec de séparation d'une structure fixe 10 de la turbomachine 1, en un flux d'air primaire qui pénètre dans une veine primaire 11 et un flux d'air secondaire qui s'écoule autour de la veine primaire 11 dans une veine secondaire 12 et participe de manière prépondérante à la poussée fournie par la turbomachine 1.

La soufflante 2 comporte un arbre 13 (ci-après dénommé arbre de soufflante 13) portant des pales 14 et entraîné en rotation par l'arbre basse pression 9 via un réducteur à train épicycloïdal 15. L'arbre de soufflante 13, l'arbre basse pression 9 et l'arbre haute pression 8 présentent un même axe de rotation qui est coaxial avec l'axe X de la turbomachine 1.

Selon l'invention, le réducteur à train épicycloïdal 15 comprend :
- un solaire 16 mobile en rotation autour d'un premier axe A et apte à être entraîné en rotation par une turbine (ici turbine basse pression 7) de la turbomachine 1 ;
- une couronne 17 entourant le solaire 16 et mobile en rotation autour du premier axe A, la couronne 17 étant apte à entraîner en rotation l'arbre de soufflante 13 ;
- au moins un satellite 18 mobile en rotation autour d'un second axe B, le satellite 18 étant engrené avec le solaire 16 et la couronne 17 ;
- un porte-satellite 19 immobile (ou fixe), le satellite 18 étant guidé en rotation autour du second axe B par rapport à un palier 29 du porte-satellite 19 ;
- un équipement 21 (ou accessoire) comprenant un rotor 22.

L'équipement 21 est rapporté sur le palier 29 du porte-satellite 19 et le rotor 22 de l'équipement 21 est entraîné en rotation par le satellite 18.

Le réducteur à train épicycloïdal 15 est ainsi de type « planétaire ». Le réducteur 15 permet de réduire la vitesse de rotation de l'arbre de soufflante 13 par rapport à celle de l'arbre basse pression 9.

L'équipement 21 comprend un rotor 22 et un stator 49. L'équipement 21 est par exemple une pompe, un alternateur, etc.

Tel qu'illustré sur les figures, plus précisément, le réducteur 15 est logé et lubrifié dans une enceinte 23 annulaire disposée entre la soufflante 2 et le compresseur basse pression 3.

Le solaire 16 est central et couplé en rotation avec l'arbre basse pression 9. L'axe de rotation du solaire 16 (premier axe A) est coaxial avec l'axe X de la turbomachine 1.

La couronne 17 est bridée à un porte-couronne 24 qui est lui-même couplé en rotation avec l'arbre de soufflante 13.

Le réducteur 15 comprend plusieurs satellites 18 répartis de manière régulière autour de l'axe X entre le solaire 16 et la couronne 17. Chaque satellite 18 est conjointement engrené avec le solaire 16 et la couronne 17. Le satellite 18 permet ici d'entraîner en rotation un unique équipement 21, mais il pourrait en entraîner plusieurs. De même, chaque satellite 18 du réducteur 15 peut entraîner en rotation un ou plusieurs équipements 21.

Le porte-satellites 19 est solidaire de la structure fixe 10 de la turbomachine 1 et se présente globalement sous la forme d'une cage supportant les satellites 18. Le porte-satellites 19 comprend ainsi une paroi périphérique bordée par deux parois latérales 26. Les satellites 18 sont disposés entre les parois latérales 26 du porte-satellites 19. Pour chacun des satellites 18, la paroi périphérique comporte une ouverture 27, de manière à permettre l'engrènement entre le satellite 18 et la couronne 17. Chaque satellite 18 est traversé et guidé en rotation par rapport à un palier 29 du porte-satellites 19, ce palier 29 étant mis et maintenu en position par rapport aux parois latérales 26 du porte-satellites 19. Chaque palier 29 comprend une bague tubulaire 20 et deux rangées annulaires de roulements ou d'éléments roulants 28 (ici des rouleaux cylindriques) distantes l'une de l'autre. Les roulements 28 de chacune des rangées sont reliés d'une part à la bague 20 du palier 29 du porte-satellites 19 et d'autre part au satellite 18. Le réducteur 15 comprend des moyens d'acheminement d'huile 30 jusqu'aux roulements 28. Avantageusement, les moyens d'acheminement 30 sont configurés pour acheminer de l'huile jusqu'à l'équipement 21.

Selon les modes de réalisation illustrés sur les figures, le rotor 22 de l'équipement 21 est entraîné en rotation par le satellite 18 via un train d'engrenages 31. Le rotor 22 de l'équipement 21 pourrait par exemple être entraîné par le satellite 18 via une liaison par clavettes, une liaison par cannelures et dentelures, une liaison par frettage, etc.

Un train d'engrenages 31 permet de décaler l'axe de rotation du rotor 22 de équipement 21 par rapport à l'axe de rotation du satellite 18 correspondant (second axe B) et/ou de modifier les paramètres de fonctionnement d'un équipement 21 (vitesse de rotation, couple, etc.).

Un train d'engrenages 31 présente un rapport de transmission défini de manière à faire fonctionner l'équipement 21 dans la plage de fonctionnement souhaitée.

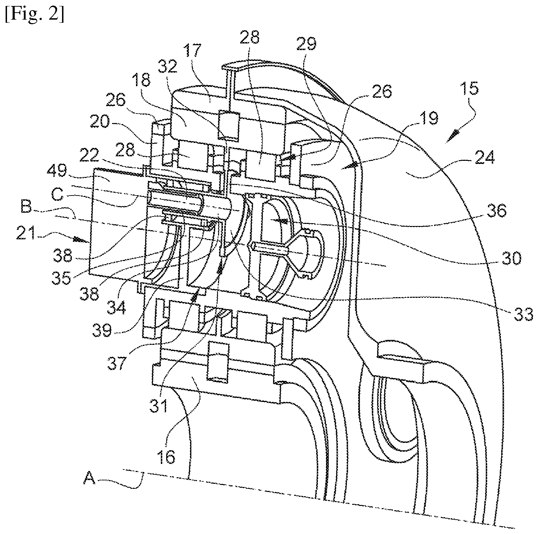

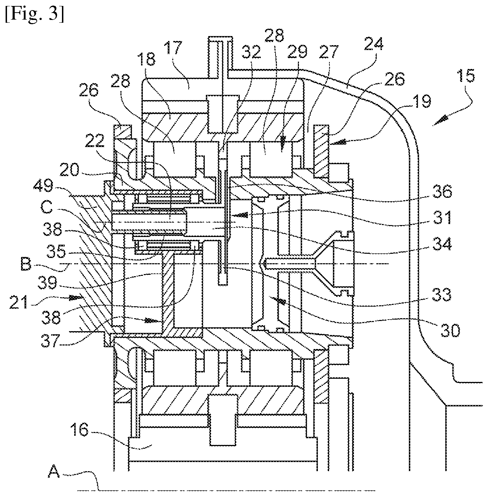

Selon le premier mode de réalisation illustré sur les figures 2 et 3, le train d'engrenages 31 est disposé entièrement à l'intérieur du satellite 18. Le train d'engrenages 31 comprend un engrenage droit entre une denture intérieure 32 du satellite 18 et une roue dentée 33 à denture extérieure. La roue dentée 33 est mobile en rotation autour d'un troisième axe C décalé par rapport au second axe B et parallèle aux premier et second axes A, B. La roue dentée 33 est solidaire d'un arbre d'entrainement 34 mobile en rotation autour du troisième axe C, le rotor 22 de l'équipement 21 étant couplé en rotation avec l'arbre d'entrainement 34 via des moyens d'accouplement 35.

Plus précisément, la denture intérieure 32 du satellite 18 est venue de matière avec le corps du satellite 18, de manière à former un satellite 18 d'un seul tenant. La roue dentée 33 à denture extérieure 33 est cylindrique. La roue dentée 33 traverse la bague 20 du palier 29 via une fente 36, de manière à permettre l'engrènement entre la roue dentée 33 et la denture intérieure 32 du satellite 18. L'arbre d'entrainement 34 est venue de matière avec la roue dentée 33.

Selon le premier mode de réalisation illustré sur les figures 2 et 3, le stator 49 de l'équipement 21 est fixé au palier 29 via un support 37. L'arbre d'entrainement 34 est guidé en rotation par rapport au support 37 via deux paliers à roulement 38 distants l'un de l'autre.

Plus précisément, le support 37 est mis et maintenu en position dans la bague 20 du palier 29. Le stator 49 de l'équipement 21 est mis et maintenu en position sur le support 37. Le support 37 est disposé à l'opposé du porte-couronne 24. L'arbre d'entrainement 34 est guidé en rotation via les deux paliers à roulement 38 par rapport à un logement formé dans une cloison 39 du support 37.

Avantageusement, les moyens d'accouplement 35 présentent un débattement angulaire. De tels moyens d'accouplement permettent de compenser les désalignements existants entre la roue dentée 33 et le rotor 22 de l'équipement 21.

Les moyens d'accouplement 35 sont par exemple des moyens d'accouplement à denture bombée communément appelés « cannelures bombées » comportant des dents bombées (et autrement dit des dents présentant chacune en section axiale un profil bombé convexe) engagées dans des cannelures axiales. Les dents bombées sont soit réalisées dans le rotor 22 de l'équipement 21 soit dans l'arbre d'entrainement 34.

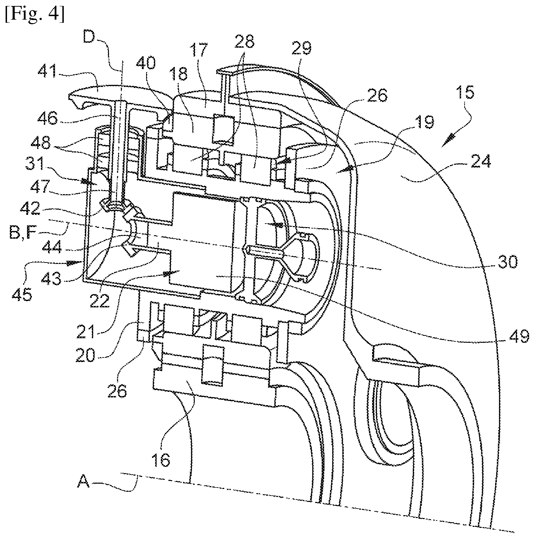

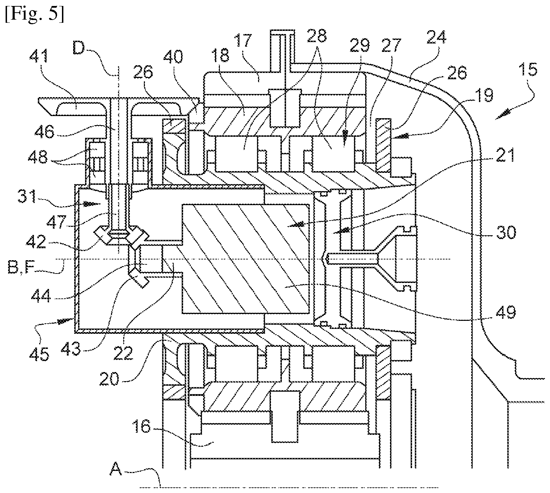

Selon le second mode de réalisation illustré sur les figures 4 et 5, le train d'engrenages 31 comprend un premier engrenage conique entre une denture extérieure 40 du satellite 18 et une première roue dentée 41 mobile en rotation autour d'un quatrième axe D perpendiculaire aux premier et second axes A, B. Le train d'engrenages 31 comprend en outre un second engrenage conique entre une seconde roue dentée 42 mobile en rotation autour du quatrième axe D et une troisième roue dentée 43 mobile en rotation autour d'un cinquième axe F parallèle aux premier et second axes A, B. La troisième roue dentée 43 est solidaire d'un arbre d'entrainement 44, le rotor 22 de l'équipement 21 étant couplé en rotation avec l'arbre d'entrainement 44 via des moyens d'accouplement 35.

Plus précisément, la denture extérieure 40 du satellite 18 peut être venue de matière avec le corps du satellite 18 ou rapportée sur le corps du satellite 18. Les première, seconde et troisième roues dentées 41, 42, 43 sont coniques. Le cinquième axe F est ici coaxial avec le second axe B. Selon le second mode de réalisation illustré sur les figures 4 et 5, le stator 49 de l'équipement 21 est rapporté sur le palier 29 via un support 45. Les première et seconde roues dentées 41, 42 sont solidaires d'un arbre de transmission 46, 47 mobile en rotation autour du quatrième axe D. L'arbre de transmission 46, 47 est guidé en rotation par rapport au support 45 via deux paliers à roulement 48 distants l'un de l'autre.

Plus précisément, le support 45 se présente sous la forme d'un boîtier. Le support 45 est mis et maintenu en position par rapport à la bague 20 du palier 29. Le stator 49 de l'équipement 21 est mis et maintenu en position dans le support 45. Le support 45 est disposé à l'opposé du porte-couronne 24. L'arbre de transmission 46, 47 comprend un premier arbre 46 et un second arbre 47 couplés en rotation l'un avec l'autre. Le premier arbre 46 est venu de matière avec la première roue dentée 41. Le second arbre 47 est venu de matière avec la seconde roue dentée 42. L'arbre d'entrainement 44 est venu de matière avec la troisième roue dentée 43. La première roue dentée 41 est ici à l'extérieur du support 45. L'arbre de transmission 46, 47 est guidé en rotation via les deux paliers à roulement 48 par rapport à un logement formé dans le support 45. Le guidage de l'arbre d'entrainement 44 n'est pas illustré sur les figures. Avantageusement, les moyens d'accouplement 35 présentent un débattement angulaire. De tels moyens d'accouplement permettent de compenser les désalignements existants entre la troisième roue dentée 43 et le rotor 22 de l'équipement 21.

Les moyens d'accouplement 35 sont par exemple des moyens d'accouplement à denture bombée communément appelés « cannelures bombées » comportant des dents bombées (et autrement dit des dents présentant chacune en section axiale un profil bombé convexe) engagées dans des cannelures axiales. Les dents bombées sont soit réalisées dans le rotor 22 de l'équipement 21 soit dans l'arbre d'entrainement 44.

## Revendications

1. Réducteur à train épicycloïdal (15) pour une turbomachine (1) comprenant :
- un solaire (16) mobile en rotation autour d'un premier axe (A) et apte à être entraîné en rotation par une turbine (7) de la turbomachine (1) ;
- une couronne (17) entourant le solaire (16) et mobile en rotation autour du premier axe (A), la couronne (17) étant apte à entraîner en rotation un arbre de soufflante (13) ;
- au moins un satellite (18) mobile en rotation autour d'un second axe (B), le satellite (18) étant engrené avec le solaire (16) et la couronne (17) ;
- un porte-satellite (19) immobile, le satellite (18) étant guidé en rotation autour du second axe (B) par rapport à un palier (29) du porte-satellite (19) ;
- un équipement (21) comprenant un rotor (22) ;
**caractérisé en ce que** l'équipement (21) est rapporté sur le palier (29) du porte-satellite (19) et le rotor (22) de l'équipement (21) est entraîné en rotation par le satellite (18).

2. Réducteur (15) selon la revendication 1, **caractérisé en ce que** le rotor (22) de l'équipement (21) est entraîné en rotation par le satellite (18) via un train d'engrenages (31).

3. Réducteur (15) selon la revendication 2, **caractérisé en ce que** le train d'engrenages (31) est disposé entièrement à l'intérieur du satellite (18).

4. Réducteur (15) selon l'une des revendications 2 ou 3, **caractérisé en ce que** le train d'engrenages (31) comprend un engrenage droit entre une denture intérieure (32) du satellite (18) et une roue dentée (33) à denture extérieure, la roue dentée (33) étant mobile en rotation autour d'un troisième axe (C) décalé par rapport au second axe (B) et parallèle aux premier et second axes (A, B), la roue dentée (33) étant solidaire d'un arbre d'entrainement (34) mobile en rotation autour du troisième axe (C), le rotor (22) de l'équipement (21) étant couplé en rotation avec l'arbre d'entrainement (34) via des moyens d'accouplement (35).

5. Réducteur (15) selon la revendication 4, **caractérisé en ce qu'**un stator (49) de l'équipement (21) est fixé au palier (29) du porte-satellite (19) via un support (37), l'arbre d'entrainement (34) étant guidé en rotation par rapport au support (37) via deux paliers (38) du support (37) distants l'un de l'autre.

6. Réducteur (15) selon la revendication 2, **caractérisé en ce que** le train d'engrenages (31) comprend un premier engrenage conique entre une denture extérieure (40) du satellite (18) et une première roue dentée (41) mobile en rotation autour d'un quatrième axe (D) perpendiculaire aux premier et second axes (A, B), et un second engrenage conique entre une seconde roue dentée (42) mobile en rotation autour du quatrième axe (D) et une troisième roue dentée (43) mobile en rotation autour d'un cinquième axe (F) parallèle aux premier et second axes (A, B), la troisième roue dentée (43) étant solidaire d'un arbre d'entrainement (44), le rotor (22) de l'équipement (21) étant couplé en rotation avec l'arbre d'entrainement (44) via des moyens d'accouplement (35).

7. Réducteur (15) selon la revendication 6, **caractérisé en ce qu'**un stator (49) de l'équipement (21) est rapporté sur le palier (29) du porte-satellite (19) via un support (45), les première et seconde roues dentées (41, 42) étant solidaires d'un arbre de transmission (46, 47) mobile en rotation autour du quatrième axe (D), l'arbre de transmission (46, 44) étant guidé en rotation par rapport au support (45) via deux paliers (48) du support (45) distants l'un de l'autre.

8. Réducteur (15) selon l'une des revendications 4 à 7, **caractérisé en ce que** les moyens d'accouplement (35) comportent des dents bombées engagées dans des cannelures axiales.

9. Réducteur (15) selon l'une des revendications précédentes, **caractérisé en ce que** le palier (29) du porte-satellite (19) comprend des roulements (28) reliés d'une part au palier (29) du porte-satellite (19) et d'autre part au satellite (18), le réducteur (15) comprenant des moyens d'acheminement d'huile (30) jusqu'aux roulements (28).

10. Turbomachine (1) comprenant un réducteur (15) selon l'une des revendications précédentes.

## Patentansprüche

1. Epizyklisches Untersetzungsgetriebe (15) für eine Turbomaschine (1), umfassend:
- ein Sonnenrad (16), um eine erste Achse (A) herum rotationsbeweglich und geeignet, durch eine Turbine (7) der Turbomaschine (1) in Rotation versetzt zu werden;
- einen Kranz (17), der das Sonnenrad (16) umgibt und um die erste Achse (A) herum rotationsbeweglich ist, wobei der Kranz (17) geeignet ist, eine Gebläsewelle (13) in Rotation zu versetzen;
- mindestens ein um eine zweite Achse (B) herum rotationsbewegliches Planetenrad (18), wobei das Planetenrad (18) mit dem Sonnenrad (16) und dem Kranz (17) in Eingriff vorliegt;
- einen unbeweglichen Planetenradträger (19), wobei das Planetenrad (18) bezüglich eines Lagers (29) des Planetenradträgers (19) um die zweite Achse (B) herum rotationsgeführt ist;
- eine Einrichtung (21), umfassend einen Rotor (22);
**dadurch gekennzeichnet, dass** die Einrichtung (21) über dem Lager (29) des Planetenradträgers (19) angebracht ist und der Rotor (22) der Einrichtung (21) durch das Planetenrad (18) in Rotation versetzt wird.

2. Untersetzungsgetriebe (15) nach Anspruch 1, **dadurch gekennzeichnet, dass** der Rotor (22) der Einrichtung (21) durch das Planetenrad (18) mittels eines Getriebezugs (31) in Rotation versetzt wird.

3. Untersetzungsgetriebe (15) nach Anspruch 2, **dadurch gekennzeichnet, dass** der Getriebezug (31) vollständig im Inneren des Planetenrads (18) angeordnet ist.

4. Untersetzungsgetriebe (15) nach einem der Ansprüche 2 oder 3, **dadurch gekennzeichnet, dass** der Getriebezug (31) ein Stirnradgetriebe zwischen einer Innenverzahnung (32) des Planetenrads (18) und einem Zahnrad (33) mit Außenverzahnung umfasst, wobei das Zahnrad (33) um eine dritte Achse (C) herum rotationsbeweglich ist, die bezüglich der zweiten Achse (B) versetzt ist und zu der ersten und zweiten Achse (A, B) parallel ist, wobei das Zahnrad (33) mit einer um die dritte Achse (C) herum rotationsbeweglichen Antriebswelle (34) einstückig ist, wobei der Rotor (22) der Einrichtung (21) mit der Antriebswelle (34) mittels Kopplungsmitteln (35) rotationsgekoppelt ist.

5. Untersetzungsgetriebe (15) nach Anspruch 4, **dadurch gekennzeichnet, dass** ein Stator (49) der Einrichtung (21) über eine Halterung (37) am Lager (29) des Planetenradträgers (19) befestigt ist, wobei die Antriebswelle (34) bezüglich der Halterung (37) über zwei voneinander beabstandete Lager (38) der Halterung (37) rotationsgeführt ist.

6. Untersetzungsgetriebe (15) nach Anspruch 2, **dadurch gekennzeichnet, dass** der Getriebezug (31) ein erstes Kegelradgetriebe zwischen einer Außenverzahnung (40) des Planetenrads (18) und einem ersten Zahnrad (41), das um eine vierte Achse (D) herum rotationsbeweglich ist, die zu der ersten und zweiten Achse (A, B) senkrecht ist, und ein zweites Kegelradgetriebe zwischen einem zweiten Zahnrad (42), das um die vierte Achse (D) herum rotationsbeweglich ist, und einem dritten Zahnrad (43), das um eine fünfte Achse (F) herum rotationsbeweglich ist, die zu der ersten und der zweiten Achse (A, B) parallel ist, umfasst, wobei das dritte Zahnrad (43) mit einer Antriebswelle (44) einstückig ist, wobei der Rotor (22) der Einrichtung (21) mit der Antriebswelle (44) mittels Kopplungsmitteln (35) rotationsgekoppelt ist.

7. Untersetzungsgetriebe (15) nach Anspruch 6, **dadurch gekennzeichnet, dass** ein Stator (49) der Einrichtung (21) über dem Lager (29) des Planetenradträgers (19) über eine Halterung (45) angebracht ist, wobei das erste und das zweite Zahnrad (41, 42) mit einer Antriebswelle (46, 47) einstückig sind, die um die vierte Achse (D) herum rotationsbeweglich ist, wobei die Antriebswelle (46, 44) bezüglich der Halterung (45) über zwei voneinander beabstandete Lager (48) der Halterung (45) rotationsgeführt ist.

8. Untersetzungsgetriebe (15) nach einem der Ansprüche 4 bis 7, **dadurch gekennzeichnet, dass** die Kopplungsmittel (35) gebogene Zähne beinhalten, die in den axialen Nuten in Eingriff gebracht sind.

9. Untersetzungsgetriebe (15) nach einem der vorstehenden Ansprüche, **dadurch gekennzeichnet, dass** das Lager (29) des Planetenradträgers (19) Wälzlager (28) umfasst, die einerseits mit dem Lager (29) des Planetenradträgers (19) und andererseits mit dem Planetenrad (18) verbunden sind, wobei das Untersetzungsgetriebe (15) Mittel zur Beförderung von Öl (30) zu den Wälzlagern (28) umfasst.

10. Turbomaschine (1) umfassend ein Untersetzungsgetriebe (15) nach einem der vorstehenden Ansprüche.

## Claims

1. An epicyclic reduction gear (15) for a turbomachine (1) comprising:
- a sun gear (16) that is rotatable about a first axis (A) and adapted to be rotatably driven by a turbine (7) of the turbomachine (1);
- a ring gear (17) surrounding the sun gear (16) and being rotatable about the first axis (A), the ring gear (17) being adapted to rotatably drive a fan shaft (13);
- at least one planet gear (18) that is rotatable about a second axis (B), the planet gear (18) being meshed with the sun gear (16) and the ring gear (17);
- an immobile planet carrier (19), the planet gear (18) being rotatably guided about the second axis (B) with respect to a bearing (29) of the planet carrier (19);
- an item of equipment (21) comprising a rotor (22);
**characterised in that** the item of equipment (21) is fitted to the bearing (29) of the planet carrier (19) and the rotor (22) of the item of equipment (21) is rotatably driven by the planet gear (18).

2. The reduction gear (15) according to claim 1, **characterised in that** the rotor (22) of the item of equipment (21) is rotatably driven by the planet gear (18) via a gear train (31).

3. The reduction gear (15) according to claim 2, **characterised in that** the gear train (31) is disposed entirely within the planet gear (18).

4. The reduction gear (15) according to one of claims 2 or 3, **characterised in that** the gear train (31) comprises a spur gear between an inner toothing (32) of the planet gear (18) and a toothed wheel (33) with outer toothing, the toothed wheel (33) being rotatable about a third axis (C) offset with respect to the second axis (B) and parallel to the first and second axes (A, B), the toothed wheel (33) being secured to a drive shaft (34) which is rotatable about the third axis (C), the rotor (22) of the item of equipment (21) being rotatably coupled with the drive shaft (34) via coupling means (35).

5. The reduction gear (15) according to claim 4, **characterised in that** a stator (49) of the item of equipment (21) is attached to the bearing (29) of the planet carrier (19) via a support (37), the drive shaft (34) being rotatably guided with respect to the support (37) via two bearings (38) of the support (37) which are spaced apart from each other.

6. The reduction gear (15) according to claim 2, **characterised in that** the gear train (31) comprises a first bevel gear between an outer toothing (40) of the planet gear (18) and a first toothed wheel (41) rotatable about a fourth axis (D) perpendicular to the first and second axes (A, B), and a second bevel gear between a second toothed wheel (42) rotatable about the fourth axis (D) and a third toothed wheel (43) rotatable about a fifth axis (F) parallel to the first and second axes (A, B), the third toothed wheel (43) being secured to a drive shaft (44), the rotor (22) of the item of equipment (21) being rotatably coupled with the drive shaft (44) via coupling means (35).

7. The reduction gear (15) according to claim 6, **characterised in that** a stator (49) of the item of equipment (21) is fitted to the bearing (29) of the planet carrier (19) via a support (45), the first and second toothed wheels (41, 42) being secured to a transmission shaft (46, 47) rotatable about the fourth axis (D), the transmission shaft (46, 44) being rotatably guided with respect to the support (45) via two bearings (48) of the support (45) which are distant from each other.

8. The reduction gear (15) according to one of claims 4 to 7, **characterised in that** the coupling means (35) comprise domed teeth engaged in axial splines.

9. The reduction gear (15) according to one of the preceding claims, **characterised in that** the bearing (29) of the planet carrier (19) comprises rolling elements (28) connected on the one hand to the bearing (29) of the planet carrier (19) and on the other hand to the planet gear (18), the reduction gear (15) comprising means for conveying oil (30) to the rolling elements (28).

10. A turbomachine (1) comprising a reduction gear (15) according to one of the preceding claims.
